# EUROPÄISCHE PATENTSCHRIFT

(11) **EP 0 631 408 B1**
(45) Veröffentlichungstag und Bekanntmachung des Hinweises auf die Patenterteilung: **07.01.1998**
(21) Anmeldenummer: 94106983.3
(22) Anmeldetag: 04.05.1994
(51) Int. Cl.: H04L 9/32

(54) **Verfahren zur Authentifikation zwischen zwei elektronischen Einrichtungen**
Method for authentication between two electronic devices
Procédé d'authentification entre deux dispositifs électroniques

(30) Priorität: 25.05.1993 DE 4317380
(43) Veröffentlichungstag der Anmeldung: 28.12.1994
(73) Patentinhaber: SIEMENS AKTIENGESELLSCHAFT, 80333 München (DE)
(72) Erfinder: Eberhard, Günther, Dipl.-Phys., D-82223 Eichenau (DE)

(56) Entgegenhaltungen:
- WO-A-91/14980
- DE-A- 4 138 861

## Beschreibung

Die Erfindung betrifft ein Verfahren zur Authentifikation zwischen zwei elektronischen Einrichtungen mit den Schritten: Generieren wenigstens zweier Zufallszahlen, Übermitteln der beiden Zufallszahlen, so daß beide sowohl in der ersten als auch in der zweiten Station verfügbar sind, und Verschlüsselung der Zufallszahlen in beiden Stationen zu jeweils einem jeder Zufallszahl zugehörigen Kryptogramm.

Ein derartiges Verfahren ist aus der DE 41 38 861 A1 bekannt. Hier wird jedoch jedesmal das komplette Kryptogramm übertragen, so daß ein Betrüger durch Verwendung mehrerer Zufallszahlen Schlüsse auf die zur Verschlüsselung benutzte Geheimzahl ziehen kann.

Aber auch aus der US-3,761,892 ist es bekannt, bei einem System von einer Station Daten an eine andere Station zu übermittelt. Daraufhin wird von der anderen Station das Datum mit einem Codeschlüssel zu einem Kryptogramm verschlüsselt und schließlich zurück an die erste Datenstation gesendet. Diese überprüft, ob das Kryptogramm richtig ist, d. h. ob der von der einen Station bekannte Codeschlüssel verwendet worden ist, und damit die Datenstation zugangsberechtigt ist.

In der US 3,761,892 ist beschrieben, daß es höchst wünschenswert ist, daß das System inoperativ bleibt, solange bis der komplette Datensatz/Kryptogramm übertragen worden ist, auch wenn bereits der erste Teil oder auch ein anderer Teild des Kryptogramms nicht mit einem zulässigen Kryptogramm übereinstimmt. Eine derartige Vorgehensweise ist bei diversen Datenstationen sicherlich sinnvoll, jedoch bei z.B. tragbaren Chipkarten kann eine derartige komplette Übertragung des Kryptogramms dazu führen, daß ein nicht legitmierter Benutzer mit einer gültigen Karte die Übertragung von Autentifikationsvorgängen mittels geeigneter Einrichtungen beobachtet und anhand der ermittelten Daten eine gültige Karte letztendlich simulieren kann.

Aufgabe der vorliegenden Erfindung ist es ein Verfahren anzugeben, welches die Nachbildung durch einen Betrüger wesentlich erschwert.

Diese Aufgabe wird durch die Verfahrensschritte des kennzeichnenden Teils des Anspruchs 1 gelöst. Weiterbildungen sind Kennzeichen der Unteransprüche.

Vorteil der Erfindung ist es, daß bei der erfindungsgemäßen in wechselseitigen Schritten vorzunehmenden Authentifikation zwischen den elektronischen Einrichtungen im Fall eines versuchten Angriffs durch Nichtübereinstimmung der zu vergleichenden Einzelschrittinformationen bereits zu Beginn des Vorgangs eine weitere Ausgabe gesperrt werden kann und damit dem Angreifer keine nutzbringenden Daten bekannt gemacht werden. Dadurch erhöht sich die Wahrscheinlichkeit, daß durch ein erzwungenes Protokoll, bei dem mit großer Sicherheit bereits nach wenigen Versuchen der Authentifikationsvorgang bereits abgebrochen werden kann und auch die Benutzung der Karte gesperrt werden kann, keine für Fälschungen wichtige Informationen preisgegeben werden.

Ein weiterer Vorteil des erfindungsgemäßen Verfahrens ist daß die Authentifikation mit relativ geringem Aufwand erfolgen kann und dadurch keine allzu hohe Rechenleistung für die Datenstationen erforderlich ist, da ein wesentliches Angriffspotential entfällt. Dies erweist sich auch als besonders vorteilhaft bei der Verwendung einer Chipkarte als eine Datenstation.

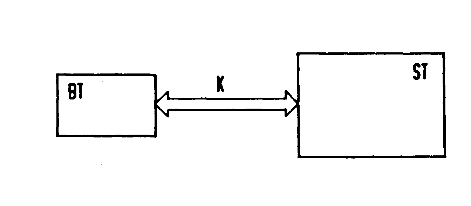

Figur 1 zeigt eine Anordnung mit zwei Datenstationen BT, ST und einer Kopplungseinrichtung K zur Datenübertragung zwischen den Datenstationen. Eine derartige Anordnung ist sowohl bei bisherigen Authentifikationsverfahren wie auch bei dem erfindungsgemäßen verwendbar.

Nachfolgend wird das konventionelle Verfahren zur Authentifikation am Beispiel der Übertragung zwischen einem beweglichen Datenträger BT und einer stationären Schreib/Lesestation ST erläutert: Zuerst generiert die stationäre Station ST eine Zufallszahl R und sendet diese Zufallszahl R über die Ankopplungsmittel K an den beweglichen Datenträger BT, der z.B. eine Chipkarte sein kann. Anschließend verschlüsselt die stationäre Station ST die Zufallszahl R mit einem Geheimschlüssel GS. Der bewegliche Datenträger BT empfängt die Zufallszahl R und verschlüsselt sie mit dem Geheimschlüssel GS der ebenfalls auf dem beweglichen Datenträger BT gespeichert ist. Das so erhaltene Kryptogramm wird dann wiederum über die Kopplungsmittel K an die stationäre Station ST gesendet. Die stationäre Station ST empfängt das Kryptogramm und vergleicht dieses mit dem eigenen berechneten Kryptogramm. Bei Übereinstimmung wird der bewegliche Datenträger als echt erkannt.

Umgekehrt kann ein analoges Verfahren zur Authentifikation des Terminals erfolgen, hier wird jedoch das Kryptogramm der stationären Station an den beweglichen Datenträger gesendet und der Vergleich erfolgt im beweglichen Datenträger.

Wie bereits zuvor beschrieben, kann bei der angegebenen Reihenfolge der gegenseitigen Authentifikation der bewegliche Datenträger durch eine Abfrageelektronik, z.B. ein falsches Terminal, zur Ausgabe eines einer eingegebenen Information zugeordneten Kryptogramms veranlaßt werden. Bei aus Aufwandsgründen kleinen Schlüsseln kann hieraus ein Angreifer durch Durchvariation der Schlüssel den zugeordneten Geheimschlüssel bestimmen. Hierbei handelt es sich um einen sogenannten gewählten Klartext-Angriff. Wird die Reihenfolge der Authentifikation vertauscht, so kann z. B. mit Hilfe einer Dummykarte als beweglichen Datenträger eine echte Schreib-Lesestation zur Ausgabe des zur eingegebenen Information zugehörigen gesuchten Kryptogramms veranlaßt werden.

Die Verwendung eines Globalschlüssels auf der Prüfstellenseite schützt hier nicht, da der dann von der Karte auszugebende Identifikator ID oder CID, der das verschlüsselte Geheimnis enthält, von der Karte vor der Authentifikation ausgegeben werden muß und damit einem Angreifer zugänglich ist.

Bei dem erfindungsgemäßen Verfahren erfolgt der Ablauf daher in folgenden Schritten:

Da das Geheimnis auf beiden Seiten, gegebenenfalls nach Übermittlung des Identifikators bekannt ist, besteht die Möglichkeit einer gleichzeitigen Berechnung der Authentifikationskryptogramme. So kann z.B. die stationäre Station ST eine Zufallszahl R1 generieren und diese an den beweglichen Datenträger BT senden. Der bewegliche Datenträger BT empfängt die Zufallszahl R1 und generiert und sendet eine zweite Zufallszahl R2 an ST und beide, beweglicher Datenträger BT und stationäre Station ST, verschlüsseln beide Zufallszahlen R1, R2 mit einem Geheimschlüssel GS. Das so erhaltene Kryptogramm wird sowohl vom beweglichen Datenträger BT wie auch von der stationären Station ST in mehrere beliebige Teile unterteilt. Dies kann soweit gehen, daß das Kryptogramm in seine einzelnen Bits unterteilt wird. Der bewegliche Teil BT sendet dann den ersten Teil des Kryptogramms von der Zufallszahl R1 an die stationäre Station. Die stationäre Station ST empfängt den ersten Teil des Kryptogramms von R1 und vergleicht diesen mit dem eigenen Kryptogrammteil von R1. Daraufhin sendet die stationäre Station ST den ersten Teil des Kryptogramms von R2 an den beweglichen Datenträger BT. Der bewegliche Datenträger BT empfängt den ersten Teil des Kryptogramms von R2 und vergleicht diesen mit dem eigenen Kryptogrammteil von R2. Daraufhin wiederholt sich der Vorgang mit den jeweiligen anderen Teilen des Kryptogramms.

Bei Nichtübereinstimmung der zu vergleichenden Informationsschritte wird in geeigneter Weise die weitere Ausgabe des Kryptogramms gesperrt. Da beim Fälschungsversuch bereits das erste oder die ersten Bits der Autentifikation nicht übereinstimmen, ist abhängig von der gewählten Schrittzahl die Ausgabe des jeweiligen Teils eines Kryptogramms für einen Betrüger kaum von Nutzen.

Der Anfangsschritt kann sowohl von der stationären Station als auch von dem beweglichen Datenträger ausgehen und wird vom wahrscheinlichsten Bedrohungsfall bestimmt. Der Vorgang kann mit einem Fehlerzähler auch zur endgültigen Sperrung der Karte kombiniert werden.

Desweiteren kann vorgesehen sein, daß bei Abbruch des Authentifikationsvorgangs weiterhin Zufallsfolgen ausgegeben werden, so daß die Abbruchstelle im Bitstrom von außen nicht feststellbar ist.

## Patentansprüche

1. Verfahren zur Authentifikation zwischen zwei elektronischen Einrichtungen mit den Schritten:
a) Generieren wenigstens zweier Zufallszahlen,
b) Übermitteln der beiden Zufallszahlen, so daß beide sowohl in der ersten als auch in der zweiten Station verfügbar sind,
c) Verschlüsselung der Zufallszahlen in beiden Stationen zu jeweils einem jeder Zufallszahl zugehörigen Kryptogramm,
**gekennzeichnet durch** die weiteren Schritte:
d) Übersenden eines Teils des ersten Kryptogramms von einer Station an die andere Station,
e) Vergleich des Kryptogrammteils in der anderen Station mit dem entsprechenden, dort berechneten Kryptogrammteil und bei Nichtübereinstimmung Abbruch der weiteren Ausgabe des Kryptogramms,
f) Übersenden eines Teils des zweiten Kryptogramms von der anderen Station,
g) Vergleich des von der anderen Station gesendeten Kryptogrammteils in der einen Station mit dem entsprechenden, hier berechneten Kryptogrammteil und Abbruch der weiteren Ausgabe des Kryptogramms bei Nichtübereinstimmung,
h) Wiederholung der Schritte d) bis g) mit den weiteren Teilen des Kryptogramms bis vollständige Übereinstimmung vorliegt oder Abbruch erfolgte.

2. Verfahren nach Anspruch 1, **dadurch gekennzeichnet**, daß die eine Zufallszahl in der einen Station erzeugt und in die andere Station gesendet wird und die andere Zufallszahl in der anderen Station erzeugt und in die eine Station gesendet wird.

3. Verfahren nach Anspruch 1 oder 2, **dadurch gekennzeichnet**, daß bei Abbruch des Authentifikationsvorgangs intern beide Stationen Zufallsfolgen weiter nach außen ausgeben, so daß die Abbruchstelle im Bitstrom außen nicht feststellbar ist.

4. Verfahren nach einem der vorhergehenden Ansprüche, **dadurch gekennzeichnet**, daß die eine Station ein tragbarer Datenträger, insbesondere eine Chipkarte, und die andere Station eine Schreib-Lesestation ist.

5. Verfahren nach einem der vorhergehenden Ansprüche, **dadurch gekennzeichnet**, daß der tragbare Datenträger einen Fehlerzähler aufweist und daß bei einer vorbestimmten Anzahl von Fehlern die Karte gesperrt wird.

## Claims

1. Method for authentication between two electronic devices, comprising the steps:
a) generation of at least two random numbers,
b) transmission of the two random numbers, so that both are available both in the first station and in the second station,
c) encryption of the random numbers in both stations to form in each case one cryptogram associated with each random number,
characterized by the further steps:
d) transmission of a part of the first cryptogram from one station to the other station,
e) comparison of the cryptogram part in the other station with the corresponding cryptogram part calculated there and, if they do not correspond, termination of further output of the cryptogram,
f) transmission of a part of the second cryptogram from the other station,
g) comparison of the cryptogram part transmitted from the other station in one station with the corresponding cryptogram part calculated here, and termination of further output of the cryptogram if they do not correspond,
h) repetition of steps d) to g) with the other parts of the cryptogram until complete correspondence is obtained or termination has taken place.

2. Method according to Claim 1, characterized in that one random number is produced in one station and is transmitted to the other station, and the other random number is produced in the other station and is sent to the first station.

3. Method according to Claim 1 or 2, characterized in that, if the authentication process is terminated internally, both stations output random number sequences further outwards so that the termination point in the bit stream cannot be detected externally.

4. Method according to one of the preceding claims, characterized in that one station is a portable data medium, in particular a chip card, and the other station is a read-write station.

5. Method according to one of the preceding claims, characterized in that the portable data medium has an error counter, and in that the card is locked at a predetermined number of errors.

## Revendications

1. Procédé d'authentification entre deux dispositifs électroniques comportant les étapes:
a) générer au moins deux nombres aléatoires,
b) transmettre les deux nombres aléatoires de telle sorte qu'ils soient tous les deux disponibles aussi bien sur la première station que sur la deuxième,
c) crypter les nombres aléatoires dans les deux stations pour en faire un cryptogramme correspondant à chacun des nombres aléatoires,
**caractérisé par** les étapes suivantes:
d) envoyer une partie du premier cryptogramme d'une station à l'autre station,
e) comparer, dans l'autre station, cette partie de cryptogramme avec la partie de cryptogramme correspondante qui y a été calculée et, en cas de non concordance, interrompre toute autre édition du cryptogramme,
f) envoyer une partie du deuxième cryptogramme à partir de l'autre station,
g) comparer, dans la première station, la partie de cryptogramme envoyée à partir de l'autre station avec la partie correspondante du cryptogramme qui a été calculée dans la première station et, en cas de non concordance, interrompre toute autre édition du cryptogramme,
h) répéter les étapes d) à g) avec les autres parties du cryptogramme jusqu'à ce qu'il y ait complète concordance ou interruption.

2. Procédé conforme à la revendication 1, **caractérisé par le fait que** un des nombre aléatoire est généré dans une des stations et est envoyé à l'autre station et que l'autre nombre aléatoire est généré dans l'autre station et est envoyé à la première station.

3. Procédé conforme à la revendication 1 ou 2, **caractérisé par le fait que**, en cas d'interruption en interne du procédé d'authentification, les deux stations continuent d'envoyer vers l'extérieur des suites aléatoires de telle sorte que la position de l'interruption dans le flux de bits ne peut pas être reconnue de l'extérieur.

4. Procédé conforme à l'une des revendications précédentes, **caractérisé par le fait que** une des stations est un support de données portable, en particulier une carte à puce, et l'autre station est une station à lecture-écriture.

5. Procédé conforme à l'une des revendications précédentes, **caractérisé par le fait que** le support de données portable comporte un compteur d'erreurs et que, quand le compteur atteint un nombre d'erreurs prédéterminé, la carte est bloquée.
